# EUROPÄISCHE PATENTANMELDUNG

(11) **EP 4 253 789 A1**
(43) Veröffentlichungstag der Anmeldung: **04.10.2023**
(21) Anmeldenummer: 23165352.8
(22) Anmeldetag: 30.03.2023
(51) Int. Cl.: F16F 1/38

(54) **ELASTOMER-METALL-BUCHSE, INSBESONDERE FÜR FAHRZEUGE**

(30) Priorität: 01.04.2022 DE 102022107834
(71) Anmelder: Jörn GmbH, 71336 Waiblingen (DE)
(72) Erfinder: Reinke, Kai, 71686 Remseck (DE); Mursinsky, Jörg, 71522 Backnang (DE)
(74) Vertreter: Liebl, Thomas

(57) **Zusammenfassung**

Die Erfindung betrifft ein Elastomer-Metall-Buchse (1), insbesondere für Fahrzeuge, mit einem stabilen Innenteil (2) mit kreiszylindrischem Querschnitt zur Befestigung an einem ersten Lagerteil mit einem Außenrohr (16), und mit einer einvulkanisierten Elastomerschicht (18) zwischen Innenteil (2) und Außenrohr (16), wobei die Elastomer-Metall-Buchse (1) in einem fertig montierten Zustand als Gelenklager mit einer Durchmesserverkleinerung des Außenrohrs (16) und dem Aufbau einer Vorspannung in der Elastomerschicht (18) in ein Aufnahmeauge zur Verbindung oder als Bestandteil eines zweiten Lagerteils eingepresst ist. Erfindungsgemäß besteht das stabile, kreiszylindrische Innenteil (2) aus einem inneren Flachstahlteil (3), das von einem Kunststoffkörper (4) mit kreiszylindrischer Außenform umgeben ist.

## Beschreibung

Die Erfindung betrifft eine Elastomer-Metall-Buchse, insbesondere für Fahrzeuge nach dem Oberbegriff des Anspruchs 1.

Eine gattungsgemäße bekannte Elastomer-Metall-Buchse (DE 100 01 704 C1) besteht aus einem stabilen Innenteil mit kreiszylindrischem Querschnitt zur Befestigung an einem ersten Lagerteil und einem Außenrohr, welches den Außendurchmesser bestimmt. Zwischen dem Innenteil und dem Außenrohr ist eine Elastomerschicht einvulkanisiert. In einem fertig montierten Zustand als Gelenklager ist die Elastomer-Metall-Buchse mit einer Durchmesserverkleinerung des Außenrohrs und dem Aufbau einer Vorspannung in der Elastomerschicht in ein Aufnahmeauge eingepresst, wobei das Aufnahmeauge Bestandteil eines zweiten Lagerteils ist oder mit einem zweiten Lagerteil verbindbar ist.

Die bekannte Elastomer-Metall-Buchse ist hier als sogenannte Schlitzbuchse ausgebildet, mit einem im Herstellzustand über die Länge durchgehenden Längsschlitz im Außenrohr und einem zugeordneten Längsschlitz in der Elastomerschicht, wobei diese Schlitze im fertig montierten Zustand nach dem Einpressen in das Aufnahmeauge in Verbindung mit einer Durchmesserverkleinerung des Außenrohrs geschlossen sind. Zudem sind sogenannte kalibrierbare Elastomer-Metall-Buchsen bekannt, bei denen das Außenrohr ohne Längsschlitz geschlossen ist und beim Einpressen in ein im Innendurchmesser kleineres Aufnahmeauge der Außendurchmesser des Außenrohes verringert und eine Vorspannung in der Elastomerschicht aufgebaut wird.

Bei der gattungsgemäßen Elastomer-Metall-Buchse besteht das metallische, stabile Innenteil aus einem dickwandigen Innenrohr oder Bolzen. Elastomer-Metall-Buchsen mit abragenden, einseitigen oder beidseitigen Anschlusspratzen sind allgemein bekannt und auch Kugelgelenke (DE 10 2016 008 773 A1) mit Anschlusspratzen sind bekannt.

Bei der gattungsgemäßen Elastomer-Metall-Buchse ist das Außenrohr ein geschlitztes Stahlblechrohr und zudem ist in der Elastomerschicht hier ein Zwischenblech ebenfalls als geschlitztes Blechrohr für eine Anpassung an eine konkrete Einbausituation und eine Vergleichmäßigung der Spannung in einer belasteten Elastomerschicht angebracht. Als Elastomer ist hier in an sich, bekannter Art, Gummi eingesetzt.

Eine weitere gattungsgemäße Elastomer-Metall-Buchse ist aus DE OS 23 37 872 bekannt.

Ein Nachteil der bekannten Elastomer-Metall-Buchsen besteht in deren hohem Gewicht, das insbesondere beim Einsatz von großen, schweren Gelenklagern mit Elastomer-Metall-Buchsen in Nutzfahrzeugen, zum Beispiel Lastkraftwagen, oder gegebenenfalls auch in Eisenbahndrehgestellen die Energieeffizienz solcher Fahrzeuge reduziert und den Forderungen nach erhöhtem Umweltschutz und verbesserter Nachhaltigkeit entgegensteht.

Aufgabe der Erfindung ist es daher eine gattungsgemäße Elastomer-Metall-Buchse so weiterzubilden, dass damit eine deutliche Gewichtsreduzierung bei vergleichbarer Funktion gegebenenfalls mit geringeren Herstellkosten erreichbar ist.

Diese Aufgabe wird mit den Merkmalen des Anspruchs 1 gelöst. Vorteilhafte Weiterbildungen sind Gegenstand der Unteransprüche.

Gemäß Anspruch 1 ist eine Elastomer-Metall-Buchse, insbesondere für Fahrzeuge, als Bestandteil eines Gelenklagers mit einem, vorzugsweise stabilen, Innenteil mit kreiszylindrischem Querschnitt zur Befestigung an einem ersten Lagerteil und mit einem Außenrohr aufgebaut. Zwischen dem Innenteil und dem Außenteil ist eine Elastomerschicht festhaftend einvulkanisiert. Im fertig montierten Zustand als Gelenklager ist die Elastomer-Metall-Buchse mit einer Durchmesserverkleinerung des Außenrohrs und dem Aufbau einer Vorspannung in der Elastomerschicht in ein Aufnahmeauge mit kleinerem Innendurchmesser eingepresst, wobei das Aufnahmeauge Bestandteil eines zweiten Lagerteils ist oder mit einem zweiten Lagerteil verbindbar ist. Erfindungsgemäß besteht das kreiszylindrische Innenteil aus einem inneren Flachstahlteil, das von einem Kunststoffkörper mit einer kreiszylindrischen Außenform umgeben ist.

Das stabile, kreiszylindrische Innenteil besteht somit aus zwei Materialien nämlich Metall und Kunststoff und nicht mehr, wie im Stand der Technik materialeinheitlich nur aus Metallmaterial. Da der verwendete Kunststoff ein kleineres, spezifisches Gewicht als das Metallmaterial aufweist, ist die erfindungsgemäße Elastomer-Metall-Buchse insgesamt mit einem vergleichsweise geringeren Gewicht herstellbar als eine Elastomer-Metall-Buchse nach dem Stand der Technik mit einem insgesamt metallischen Innenteil. Das innere Flachstahlteil ist dabei so dimensioniert, dass auftretende Kräfte und Momente dauerfest übertragen werden können.

Beim Einsatz erfindungsgemäßer gewichtsreduzierter Elastomer-Metall-Buchsen in Gelenklagern ergibt sich eine vorteilhafte Steigerung der Energieeffizienz, insbesondere beim Einsatz mehrerer relativ großer, hochbelastbarer Elastomer-Metall-Buchse in Nutzfahrzeugen, wobei beispielhaft eine Gewichtsreduzierung von ca. 400 Gramm bei einer Elastomer-Metall-Buchse möglich ist.

Bei einer besonders bevorzugten Ausführungsform einer erfindungsgemäßen Elastomer-Metall-Buchse überragt das Flachstahlteil beidseitig axial den Bereich des zylindrischen Innenteils zur Ausbildung beidseitiger Anschlusspratzen oder nur einseitig zur Ausbildung einer Anschlusspratze jeweils mit Anschlussbohrungen zur Aufnahme einer Befestigungsschraube.

Bei den bekannten Elastomer-Metall-Buchsen wird zur Ausbildung vom Anschlusspratzen der kreiszylindrische, metallische Innenteil abgeflacht. Insbesondere bei kleineren Stückzahlen ist die Herstellung sehr kostenintensiv, da die dafür erforderliche Bearbeitung spanend erfolgt und wegen der abgeflachten Enden viel Zerspanungsarbeit anfällt. Zudem ergibt sich am Übergang vom kreiszylindrischen Innenteil zum abgeflachten Bereich der Anschlusspratzen jeweils eine mechanische Kerbe. Diese Übergänge sind in der Regel die belastungskritischen Stellen, da dort die mechanischen Spannungen am höchsten sind.

Durch die erfindungsgemäße Verlängerung des inneren Flachstahlteils zu Anschlusspratzen entfällt vorteilhaft einerseits eine spanende Bearbeitung und zudem entfallen mechanische Kerben, sodass die Spannungsbelastung insgesamt auf das erfindungsgemäße Flachstahlteil auf deutlich niedrigerem Niveau liegt.

Damit ist als weitere Optimierung eine vergleichsweise relativ geringe Dicke des Flachstahlteils möglich, die eine Gestaltung der gesamten Elastomer-Metall-Buchse, sofern die Belastbarkeit der Elastomerschicht dies zulässt, kompakter und gewichtsgünstiger sowie kostengünstiger ermöglicht. Alternativ oder zusätzlich kann gegebenenfalls für das Flachstahlteil anstelle eines üblichen hochfesten Stahls, zum Beispiel 42 CrMo, ein Stahl mit geringerer Festigkeit gewählt werden, der in der Regel auch kostengünstiger ist. Damit ergibt sich noch ein weiterer Vorteil: Hochfeste Stähle mit einer Zugfestigkeit von über 1.000 N/mm² neigen bei einer galvanischen Oberflächenbeschichtung zum Korrosionsschutz zur Wasserstoffversprödung. In diesem Fall muss bei der Materialspezifikation für die Zugfestigkeit nicht nur eine Untergrenze, sondern auch eine Obergrenze spezifiziert werden, die im Fall eines 42 CrMo Stahls auch erreicht werden kann. In diesem Fall muss bei der Oberflächenbeschichtung mit einem Tempervorgang ein weiterer Arbeitsschritt erfolgen. Ein Tempern nach der Vulkanisation ist nicht mehr möglich. Somit erhöhen sich die Materialkosten durch Vorselektion der Chargen, was durch die Möglichkeit Stähle mit geringerer Festigkeit einzusetzen, entfällt.

Das erfindungsgemäß verwendete Flachstahlteil ist bevorzugt ein kostengünstiger Strangstahlabschnitt mit rechtwinkligem Querschnitt.

Bei einer ersten Ausführungsform ist zur Ausbildung des Kunststoffkörpers mit der kreiszylindrischen Außenform das innere Flachstahlteil mit Kunststoff festhaftend umgossen oder umspritzt, mit anschließendem Vulkanisiervorgang zur Ausbildung der Elastomerschicht.

Alternativ ist in einer zweiten Ausführungsform der Kunststoffkörper mit der kreiszylindrischen Außenform mehrteilig ausgeführt, wobei die Einzelteile formschlüssig, gegebenenfalls mit einem leichten Presssitz auf das Flachstahlteil, dieses umschließend aufgesteckt sind mit anschließendem Vulkanisiervorgang zur Ausbildung der Elastomerschicht.

Grundsätzlich können die Einzelteile des Kunststoffkörpers aus unterschiedlich geformten Teilen bestehen. Einfach und kostengünstig kann der Kunststoffkörper jedoch aus zwei, vorzugsweise gleichen, im Spritzgussverfahren hergestellten, längsgeteilten Schalenhälften bestehen, die das Flachstahlteil einschließend radial aufgesteckt sind.

Der Kunststoff in der erfindungsgemäßen Verwendung als Kunststoffkörper bei einer in der Regel hochbelastbaren Elastomer-Metall-Buchse, insbesondere bei einem Gelenklager für Fahrzeuge, muss eine gewisse Festigkeit aufweisen. Dementsprechend ist der Kunststoff bevorzugt ein hochfester Kunststoff mit einer Zugfestigkeit von 80 bis 250 MPa und/oder einer Streckspannung/Bruchspannung von 50 bis 300 MPa, wobei die Zugfestigkeit und/oder die Streckspannung/Bruchspannung jeweils gemäß DIN EN ISO 527 bestimmt sind. Die Streckspannung ist dabei die Zugspannung bei der die Kurve im Spannungs-Dehnungs-Diagramm das erste Mal horizontal wird und sich die Probe einschnürt. Da es bei harten, relativen spröden Kunststoffen kein Strecken gibt, wird hier die Bruchspannung als kennzeichnender Wert verwendet. Sie ist also die Zugspannung zum Zeitpunkt des Bruchs. Streckspannung und Bruchspannung weichen in der Praxis meist nicht sehr voneinander ab.

Als Kunststoff, insbesondere als hochfester Kunststoff für den Kunststoffkörper ist insbesondere ein glasfaserverstärkten Kunststoff geeignet, der nach wie vor ein im Vergleich zum Metallmaterial des Flachstahlteils wesentlich kleineres, spezifisches Gewicht aufweist. Besonders bevorzugt ist hierbei ein glasfaserverstärkten Kunststoff mit einem Glasfaseranteil von 15% bis 70%, bevorzugt mit einem Glasfaseranteil von 30% bis 50%, vorgesehen. Besonders geeignet als Kunststoffe, insbesondere als mit Glasfasern verstärkte Kunststoffe, sind Polycaprolactam-Kunststoffe oder Polyamid-Kunststoffe. Konkrete Beispiele für Kunststoffe wären PA6 und PA66, beide bevorzugt, aber nicht notwendig, glasfaserverstärkt.

Elastomer-Metall-Buchsen werden in der Regel verwendet, wenn die Hauptlastrichtung in Radialrichtung liegt, gegebenenfalls in Verbindung mit Verdrehbelastungen. Eine Verdrehsicherung zwischen dem Flachstahlteil und dem Kunststoffkörper ist durch den nicht kreisrunden Querschnitt des Flachstahls gegeben. Wenn zusätzlich zu den Radialbelastungen auch noch meist geringere Axialkräfte anliegen, müssen auch diese sicher übertragen werden, ohne dass sich der Kunststoffkörper auf dem inneren Flachstahlteil relativ verschiebt.

Bei einem einfachen Umspritzen oder Umgießen des Flachstahlteils mit Kunststoff liegt dieser bereits festhaftend am Flachstahlteil an, sodass damit bereits, zumindest geringe auftretende Axialkräfte übertragen werden können. Durch eine Struktur mit Hinterschnitten auf der Oberfläche des Flachstahlteils lassen sich die maximal übertragbaren Axialkräfte erheblich steigern. Insbesondere bei einem mehrteiligen Aufbau des Kunststoffkörpers ist eine weitere Steigerung dadurch möglich, dass am Flachstahlteil, insbesondere in Querrichtung verlaufende Kerben und/oder Rillen und/oder Rippen und/oder eine Riffelung angebracht sind, in die der Kunststoffkörper mit einer Gegenstruktur als Axialsicherung eingreift.

Als Außenrohr der erfindungsgemäßen Elastomer-Metall-Buchse kann in an sich bekannter Weise als Stahlrohr oder aus einer Aluminiumlegierung oder aus Kunststoff hergestellt sein.

In einer bevorzugten Ausführungsform ist die Elastomer-Metall-Buchse als sogenannte Schlitzbuchse ausgebildet mit einem im Herstellzustand über die Länge durchgehenden Längsschlitz im Außenrohr und in der Elastomerschicht. Im fertig montierten Zustand ist der Längsschlitz nach dem Einpressen in das Aufnahmeauge in Verbindung mit einer Durchmesserverkleinerung des Außenrohrs und dem Aufbau einer Vorspannung in der Elastomerschicht geschlossen.

In einer alternativen Ausführungsform ist die Elastomer-Metall-Buchse als sogenannte kalibrierbare Buchse ausgebildet mit einem im Herstellzustand im Vergleich zum Innendurchmesser des Aufnahmeauges größeren Außendurchmesser eines geschlossenen Außenrohrs, das im fertig montierten Zustand nach dem Einpressen in das Aufnahmeauge einen entsprechend kleineren Durchmesser in Verbindung mit einer Vorspannung in der Elastomerschicht aufweist.

Auch in der Elastomerschicht, vorzugsweise einer Gummischicht können in an sich bekannter Weise ein oder mehrere Zwischenbleche angeordnet sein, um die Steifigkeiten und Belastbarkeiten in den unterschiedlichen Richtungen an konkrete Gegebenheiten anpassen zu können.

Weiter wird ein Fahrzeug, insbesondere ein Nutzfahrzeug mit einem Gelenklager mit einer Elastomer-Metall-Buchse nach einem der Ansprüche beansprucht.

Anhand einer Zeichnung wird die Erfindung weiter erläutert.

Es zeigen:
- Fig. 1: eine erste Ausführungsform eines Innenteils einer Elastomer-Metall-Buchse in einer Draufsicht mit einem Flachstahlteil mit umspritztem Kunststoffkörper;
- Fig. 2: eine um 90 Grad verdrehte Draufsicht auf das Innenteil der Elastomer-Metall-Buchse nach Fig. 1 mit einem teilweisen Schnitt des Kunststoffkörpers;
- Fig. 3 und 4: Draufsichten auf eine zweite Ausführungsform eines Innenteils einer Elastomer-Metall-Buchse entsprechend der Fig. 1 und 2, jedoch mit einem zweiteiligen Kunststoffkörper;
- Fig. 5 und 6: Ansichten einer Schalenhälfte von denen zwei in der Ausführung nach Fig. 3 und 4 verbaut sind;
- Fig. 7: eine stirnseitige Ansicht einer Elastomer-Metall-Buchse als Schlitzbuchse mit Innenteil und Außenrohr mit dazwischen einvulkanisierter Elastomerschicht;
- Fig. 8: eine Draufsicht auf die Elastomer-Metall-Buchse nach Fig. 7 mit einem Innenteil entsprechend Fig. 4.

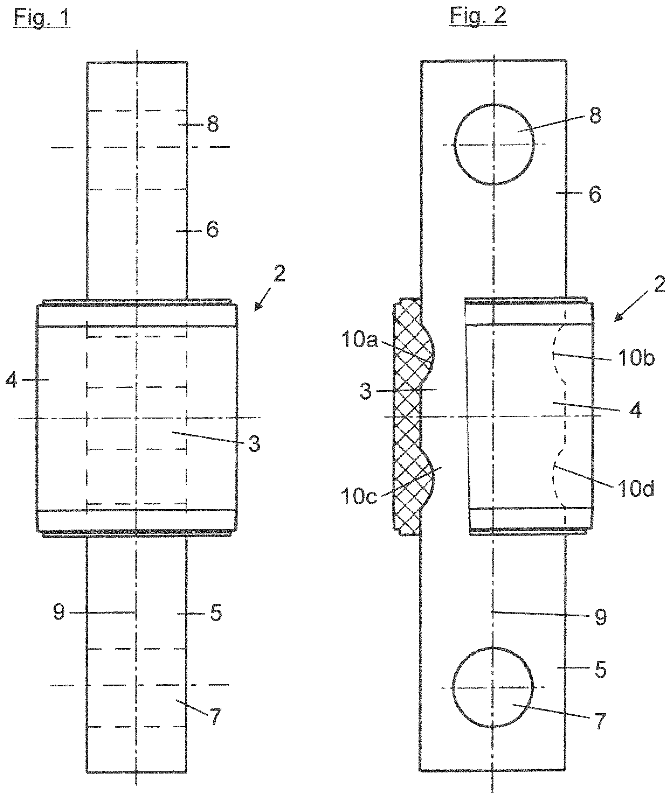

In Figur 1 ist eine Draufsicht auf ein Innenteil 2 einer Elastomer-Metall-Buchse 1 dargestellt. Das Innenteil 2 besteht aus einem inneren Flachstahlteil 3 und einem im mittleren Bereich des Flachstahlteils 3 umspritzten Kunststoffkörper 4.

Beidseitig des Kunststoffkörpers 4 erstreckt sich das Flachstahlteil 3 mit zwei Anschlusspratzen 5, 6, welche je eine Bohrung 7, 8 zur Aufnahme einer Befestigungsschraube zur Verbindung mit einem ersten Lagerteil aufweisen.

Das Flachstahlteil 3 hat einen rechtwinkligen Querschnitt und ist derart dimensioniert, dass alle an einem fertigen montierten Gelenk auftretenden Kräfte und Momente dauerfest übertragen werden können. Entsprechend ist der Kunststoffkörper 4 mit seiner kreiszylindrischen Außenform aus einem hochfesten, jedoch im Vergleich zum Stahlmaterial wesentlich leichteren Kunststoffmaterial hergestellt.

In Figur 2 ist eine Draufsicht auf das Innenteil 2 nach Figur 1 in einer um 90° um die Längsachse 9 gedrehten Ansicht dargestellt mit einem teilweisen Längsschnitt durch den Kunststoffkörper 4. Daraus ist ersichtlich, dass jeweils an den Schmalseiten des Flachstahlteils 3 im Bereich des Kunststoffkörpers 4 beispielhaft jeweils zwei beabstandete Kerben 10a, 10b, 10c, 10d angebracht sind, in die der aufgespritzte Kunststoffkörper 4 als Axialsicherung gegen eine Relativverschiebung zwischen dem Kunststoffkörper 4 und dem Flachstahlteil 3 bei hohen Axialkräften eingreift. Auch zwei Kerben 10a, 10c sind für eine geeignete Axialsicherung gegebenenfalls ausreichend.

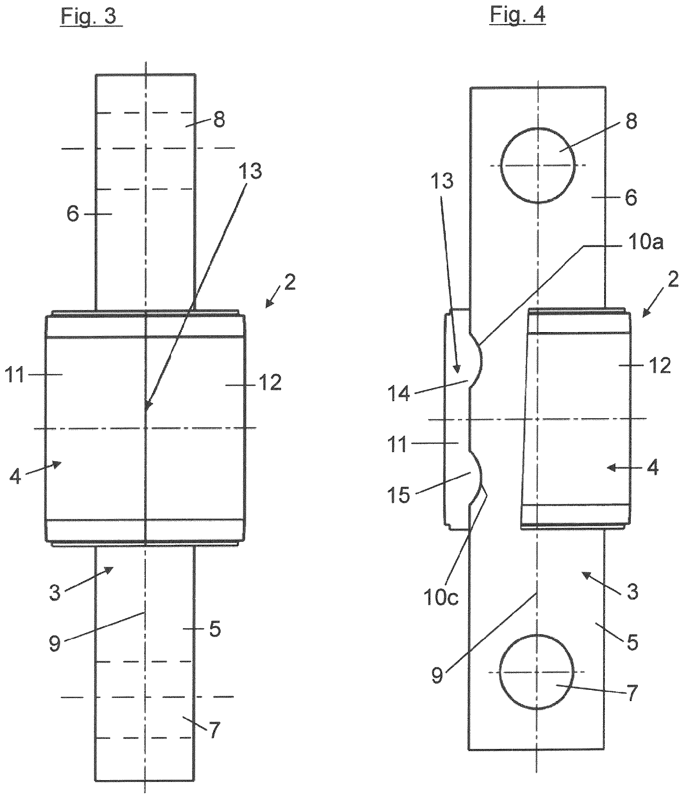

In den Figuren 3 und 4 ist eine zweite Ausführungsform eines Innenteils 2 dargestellt, das weitgehend der ersten Ausführungsform nach den Figuren 1 und 2 entspricht, mit dem Unterschied, dass der Kunststoffkörper 4 aus zwei aufgesteckten Schalenhälften 11, 12 besteht, die jeweils an den Ebenen 13, das Flachstahl 3 umschließend aneinander liegen und dabei die kreiszylindrische Außenform bilden.

Auch in Figur 4 sind zwei Kerben 10a, 10c der Axialsicherung dargestellt, in die die Schalenhälften 11, 12 des Kunststoffkörpers 4 mit entsprechenden formangepassten Rippen 14, 15 eingreifen, wobei die Axialsicherung hier einseitig an einer Schmalseite des Flachstahlteils 3 ausgebildet ist.

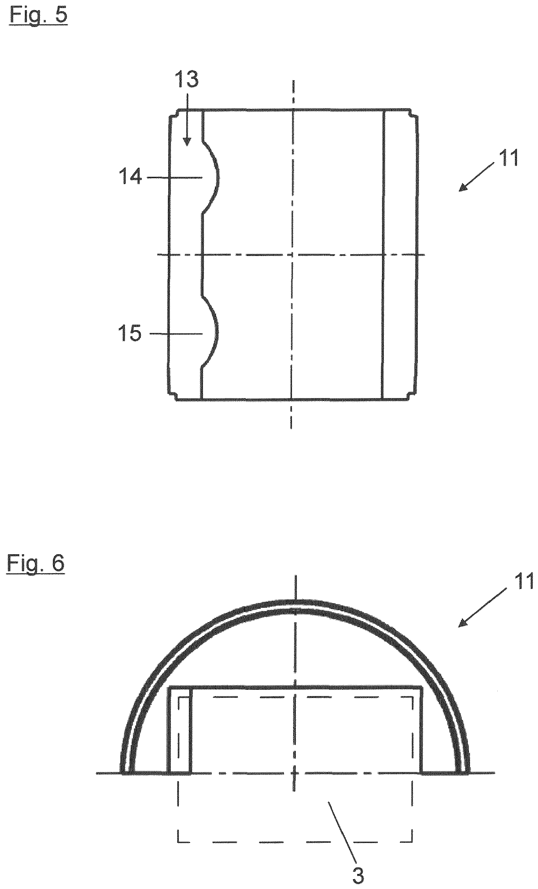

In Figur 5 ist eine Ansicht auf die Schalenhälfte 11 in ihre Vertiefung hinein dargestellt. In Figur 6 ist eine stirnseitige Draufsicht auf die Schalenhälfte 11 gezeigt, aus der ersichtlich ist, wie sie das (strichliert eingezeichnete) Flachstahlteil 3 mit halbseitiger, kreiszylindrischer Außenform im aufgesteckten Zustand umschließt.

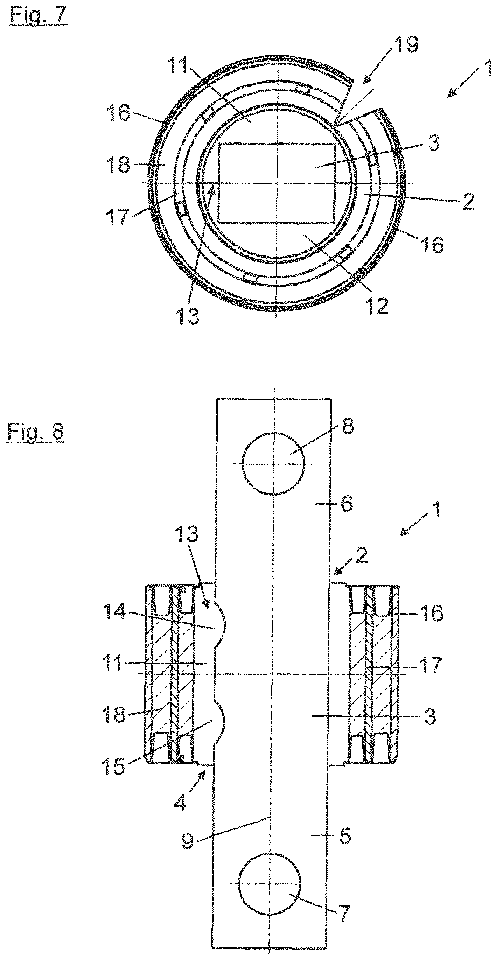

In der stirnseitigen Ansicht nach Figur 7 und der teilweise geschnitten Draufsicht nach Figur 8 ist die Elastomer-Metall-Buchse 1 dargestellt, mit dem Innenteil 2 das entsprechend Figur 4 aus dem Flachstahlteil 3 und dem Kunststoffkörper 4 gebildet ist. Der Kunststoffkörper 4 ist in diesen Darstellungen wiederrum aus den beiden Schalenhälften 11, 12 gebildet, wobei diese Darstellungen auch entsprechend auf die erste Ausführungsform mit einem aufgespritzten Kunststoffkörper 4 übertragbar sind.

In den Figuren 7 und 8 ist bereits in einem weiteren Herstellungsschritt ein Vulkanisiervorgang durchgeführt worden, mit dem zwischen dem Innenteil 2 und einem Außenrohr 16 sowie einem Zwischenrohr 17 eine Elastomerschicht 18 als Gummischicht einvulkanisiert ist.

Die in den Figuren 7 und 8 dargestellte Elastomer-Metall-Buchse 1 ist als sogenannte Schlitzbuchse ausgebildet mit einem im Herstellzustand über die Länge durchgehenden Längsschlitz 19, der sich keilförmig vom Außenrohr 16 durch die Elastomerschicht 18 und das Zwischenrohr 17 bis zum Innenteil 2 erstreckt. In einem fertig montierten Zustand als Gelenklager ist der Längsschlitz 19 nach dem Einpressen in ein nicht dargestelltes im Durchmesser kleineres Aufnahmeauge in Verbindung mit dem Aufbau einer Vorspannung in der Elastomerschicht 18 geschlossen. Das Aufnahmeauge ist dabei Bestandteil eines zweiten Lagerteils oder ist mit einem zweiten Lagerteil verbindbar.

### Bezugszeichenliste

- 1: Elastomer-Metall-Buchse
- 2: Innenteil
- 3: Flachstahlteil
- 4: Kunststoffkörper
- 5: Anschlusspratze
- 6: Anschlusspratze
- 7: Bohrung
- 8: Bohrung
- 9: Längsachse
- 10a, b, c, d: Kerben
- 11: Schalenhälfte
- 12: Schalenhälfte
- 13: Trennebene
- 14: Rippen
- 15: Rippen
- 16: Außenrohr
- 17: Zwischenrohr
- 18: Elastomerschicht
- 19: Längsschlitz

## Patentansprüche

1. Elastomer-Metall-Buchse (1), insbesondere für Fahrzeuge,
- mit einem, vorzugsweise stabilen, Innenteil (2) mit kreiszylindrischem Querschnitt zur Befestigung an einem ersten Lagerteil,
- mit einem Außenrohr (16), und
- mit einer einvulkanisierten Elastomerschicht (18) zwischen Innenteil (2) und Außenrohr (16), wobei die Elastomer-Metall-Buchse (1) in einem fertig montierten Zustand als Gelenklager mit einer Durchmesserverkleinerung des Außenrohrs (16) und dem Aufbau einer Vorspannung in der Elastomerschicht (18) in ein Aufnahmeauge zur Verbindung oder als Bestandteil eines zweiten Lagerteils einpressbar ist,
**dadurch gekennzeichnet,**
**dass** das kreiszylindrische Innenteil (2) aus einem inneren Flachstahlteil (3) besteht, das von einem Kunststoffkörper (4) mit kreiszylindrischer Außenform umgeben ist.

2. Elastomer-Metall-Buchse nach Anspruch 1, **dadurch gekennzeichnet, dass** das Flachstahlteil (3) beidseitig axial den Bereich des zylindrischen Innenteils zur Ausbildung beidseitiger Anschlusspratzen (5, 6) oder einseitig zur Ausbildung einer Anschlusspratze jeweils mit Anschlussbohrungen (7, 8) überragt.

3. Elastomer-Metall-Buchse nach Anspruch 1 oder 2, **dadurch gekennzeichnet, dass** das Flachstahlteil (3) ein Strangstahlabschnitt mit rechtwinkeligem Querschnitt ist.

4. Elastomer-Metall-Buchse nach einem der Ansprüche 1 bis 3, **dadurch gekennzeichnet, dass** zur Ausbildung des Kunststoffkörpers (4) mit der kreiszylindrischen Außenform das innere Flachstahlteil (3) mit Kunststoff festhaftend umgossen oder umspritzt ist mit anschließender Vulkanisierung der Elastomerschicht (18).

5. Elastomer-Metall-Buchse nach einem der Ansprüche 1 bis 3, **dadurch gekennzeichnet, dass** der Kunststoffkörper (4) mit der kreiszylindrischen Außenform mehrteilig ausgeführt ist, wobei die Einzelteile (11, 12) formschlüssig, gegebenenfalls mit einem leichten Presssitz, auf das Flachstahlteil (3), dieses umschließend, aufgesteckt sind mit anschließender Vulkanisierung der Elastomerschicht (18).

6. Elastomer-Metall-Buchse nach Anspruch 5, **dadurch gekennzeichnet, dass** der Kunststoffkörper (4) aus zwei, vorzugsweise gleichen, im Spritzgussverfahren hergestellten, längsgeteilten Schalenhälften (11, 12) besteht, die, das Flachstahlteil (3) umschließend, radial aufgesteckt sind.

7. Elastomer-Metall-Buchse nach einem der Ansprüche 1 bis 6, **dadurch gekennzeichnet, dass** der Kunststoff des Kunststoffkörpers (4) ein hochfester Kunststoff mit einer Zugfestigkeit von 80 bis 250 MPa und/oder einer Streckspannung/Bruchspannung von 50 bis 300 MPa ist, wobei die Zugfestigkeit und/oder die Streckspannung/Bruchspannung jeweils gemäß DIN EN ISO 527 bestimmt sind.

8. Elastomer-Metall-Buchse nach einem der Ansprüche 1 bis 7, **dadurch gekennzeichnet, dass** der Kunststoff des Kunststoffkörpers (4) aus einem glasfaserverstärkten Kunststoff gebildeten ist.

9. Elastomer-Metall-Buchse nach Anspruch 8, **dadurch gekennzeichnet, dass** der glasfaserverstärkte Kunststoff einen Glasfaseranteil von 15% bis 70%, bevorzugt einen Glasfaseranteil von 30% bis 50% aufweist.

10. Elastomer-Metall-Buchse nach einem der Ansprüche 1 bis 9, **dadurch gekennzeichnet, dass** der Kunststoff des Kunststoffkörpers (4) ein Polycaprolactam-Kunststoff oder ein Polyamid-Kunststoff ist.

11. Elastomer-Metall-Buchse nach einem der Ansprüche 1 bis 10, **dadurch gekennzeichnet, dass** die Oberfläche des Flachstahlteils (3) im Bereich des Kunststoffkörpers (4) eine Struktur mit Hinterschnitten aufweist.

12. Elastomer-Metall-Buchse nach Anspruch 11, **dadurch gekennzeichnet, dass** am Flachstahlteil (3), insbesondere in Querrichtung verlaufende, Kerben (10a, 10b, 10c, 10d) oder Rillen und/oder Rippen und/oder eine Riffelung angebracht sind, in die der Kunststoffkörper (4) mit einer Gegenstruktur als Axialsicherung eingreift.

13. Elastomer-Metall-Buchse nach einem der Ansprüche 1 bis 12, **dadurch gekennzeichnet, dass** das Außenrohr (17) als Stahlrohr oder aus einer Aluminiumlegierung oder aus Kunststoff hergestellt ist.

14. Elastomer-Metall-Buchse nach einem der Ansprüche 1 bis 13, **dadurch gekennzeichnet, dass** die Elastomer-Metall-Buchse (1) als Schlitzbuchse ausgebildet ist mit einem im Herstellzustand über die Länge durchgehenden Längsschlitz (19) im Außenrohr (16) und in der Elastomerschicht (18), der im fertig montierten Zustand nach dem Einpressen in das Aufnahmeauge in Verbindung mit einer Durchmesserverkleinerung des Außenrohrs und dem Aufbau einer Vorspannung in der Elastomerschicht (18) geschlossen ist.

15. Elastomer-Metall-Buchse nach einem der Ansprüche 1 bis 13, **dadurch gekennzeichnet, dass** die Elastomer-Metall-Buchse (1) als kalibrierbare Buchse ausgebildet ist mit einem im Herstellzustand im Vergleich zum Innendurchmesser des Aufnahmeauges größeren Außendurchmesser eines geschlossenen Außenrohrs (16), das im fertig montierten Zustand nach dem Einpressen in das Aufnahmeauge einen entsprechend kleineren Durchmesser in Verbindung mit einer Vorspannung in der Elastomerschicht (18) aufweist.

16. Elastomer-Metall-Buchse nach einem der Ansprüche 1 bis 15, **dadurch gekennzeichnet, dass** in der Elastomerschicht (18), vorzugsweise einer Gummischicht, Zwischenbleche (17) angeordnet sind.

17. Fahrzeug, insbesondere Nutzfahrzeug, mit einem Gelenklager mit einer Elastomer-Metall-Buchse (1) nach einem der vorhergehenden Ansprüche.
